# EUROPÄISCHE PATENTSCHRIFT

(11) **EP 1 572 381 B1**
(45) Veröffentlichungstag und Bekanntmachung des Hinweises auf die Patenterteilung: **14.02.2007**
(21) Anmeldenummer: 03782326.7
(22) Anmeldetag: 06.12.2003
(51) Int. Cl.: B06B 1/04

(54) **ELEKTROMAGNETISCHER ULTRASCHALLPRÜFKOPF**
ELECTROMAGNETIC ULTRASOUND PROBE
Palpeur électromagnétique à ultrasons

(30) Priorität: 19.12.2002 DE 10259409
(43) Veröffentlichungstag der Anmeldung: 14.09.2005
(73) Patentinhaber: Fraunhofer-Gesellschaft zur Förderung der angewandten Forschung e.V., 80686 München (DE)
(72) Erfinder: SALZBURGER, Hans-Jürgen, 66539 Neunkirchen (DE); VISKOV, Alexander, 66125 Saarbrücken (DE)
(74) Vertreter: Rösler, Uwe
(86) Internationale Anmeldenummer: PCT/EP2003/013856
(87) Internationale Veröffentlichungsnummer: WO 2004/056498

(56) Entgegenhaltungen:
- EP-A- 0 440 317
- EP-A- 0 579 255
- DE-A- 3 935 432
- US-A- 6 009 756
- PETERSEN G L ET AL: "RESONANCE TECHNIQUES AND APPARATUS FOR ELASTIC-WAVE VELOCITY DETERMINATIO IN THIN METAL PLATES" REVIEW OF SCIENTIFIC INSTRUMENTS, AMERICAN INSTITUTE OF PHYSICS. NEW YORK, US, Bd. 65, Nr. 1, 1994, Seiten 192-198, XP000428565 ISSN: 0034-6748

## Beschreibung

### Technisches Gebiet

Die Erfindung bezieht sich auf einen elektromagnetischen Ultraschallprüfkopf zur koppelmittelfreien Erzeugung sowie Empfang von Ultraschallwellen in Form linear polarisierter Transversalwellen in ein bzw. aus einem Werkstück. Ein derartiger Ultraschallprüfkopf sieht eine Ultraschallwellen innerhalb des Werkstückes erzeugende Einheit vor, mit einer Sendespulenanordnung, an die zur Erzeugung eines HF-Magnetfeldes eine HF-Spannung anlegbar ist: Eine Vormagnetisierungseinheit sorgt darüber hinaus zur Erzeugung eines quasistatischen Magnetfeldes, das das HF-Magnetfeld im Werkstück überlagert. Zum Nachweis der Ultraschallwellen ist überdies eine die Ultraschallwellen empfangende Einheit vorgesehen, die eine Empfangsspulenanordnung aufweist, die mit einer Auswerteeinheit verbindbar ist.

Zur Vermeidung, dass die zumeist nur filigran ausgebildeten Sendespulen- und Empfangsspulenanordnungen durch unmittelbaren Kontakt mit der Werkstückoberfläche mechanischen Schaden erleiden, sind diese torusförmig auf wenigstens einem teilringartig ausgebildeten Magnetkern angeordnet, der jeweils zwei dem Werkstück zukehrbare Stirnflächen aufweist, über die die HF-Magnetfelder in das Werkstück oder aus dem Werkstück ein- bzw. auskoppelbar sind. Auf diese Weise ist es möglich die Spulenanordnungen von der Werkstückoberfläche beabstandet anzuordnen, dennoch werden die für die Erzeugung sowie auch für den Nachweis von Ultraschallwellen innerhalb des Werkstückes erforderlichen HF-Magnetfelder effektiv über den teilringartig ausgebildeten Magnetkern in das Werkstück ein- bzw. aus diesem ausgekoppelt.

Derartige Ultraschall-Prüfköpfe ermöglichen die Erzeugung sowie den Empfang von linear polarisierten Transversalwellen, die senkrecht unter dem Prüfkopf in das Werkstück abgestrahlt bzw. aus dieser Richtung empfangen werden und senkrecht zu ihrer Ausbreitungsrichtung in einer Ebene schwingen. Technische Anwendungsgebiete derartiger Ultraschall-Prüfköpfe sind bspw. die zerstörungsfreie Prüfung elektrisch leitfähiger Werkstücke auf Materialfehler, wie bspw. Risse, insbesondere senkrecht zur Polarisationsrichtung der Ultraschallwelle und parallel zur Ausbreitungsrichtung orientierte rissartige Fehler, sowie andere auf Ultraschallgeschwindigkeit und Polarisation basierende Verfahren, wie bspw. die Spannungsmessung oder insbesondere die Dickenmessung.

### Stand der Technik

Die aus dem Stand der Technik bekannten koppelmittelfreien elektromagnetischen Prüfköpfe wandeln elektromagnetische Feldenergien in elastische Energie einer Ultraschallwelle und umgekehrt. Der Wandlungsmechanismus beruht hierbei auf den Wechselwirkungen zwischen dem elektromagnetischen Feld und einem elektrisch leitendem Material, das zudem durch ein von außen angelegtes statisches oder quasi statisches Magnetfeld durchsetzt wird. Der Begriff "quasi statisches" Magnetfeld umfasst neben einem tatsächlich statischen Magnetfeld, das bspw. mittels Permanentmagnete erzeugbar ist, auch niederfrequente Magnetfelder, deren Wechselfrequenz sehr viel kleiner ist als die Hochfrequenz, mit der die Sendespulenanordnung zur Erzeugung von Hochfrequenzfeldern betrieben wird.

Zur Anregung von Ultraschallwellen innerhalb eines elektrisch leitenden Werkstückes wird zumindest ein Teil des von der Hochfrequenzspulenanordnung erzeugten hochfrequenten Magnetfeldes, dessen Frequenzbereich innerhalb des Ultraschall-Frequenzbereiches liegt, in das Werkstück eingekoppelt, innerhalb der sogenannten Skintiefe Wirbelströme erzeugt werden, die zusammen mit dem "quasi statischen" Magnetfeld aufgrund von Lorentz-Kräften oder Magnetostriktionen innerhalb des Werkstückes Ultraschallwellen erzeugen.

Der Nachweis von innerhalb des Werkstückes auftretenden Ultraschallwellen erfolgt in umgekehrter Weise über die Detektion der induzierten elektrischen Spannung innerhalb der Empfangsspulenanordnung, die durch HF-Felder bewirkt wird, die wiederum durch Ultraschallwellen bedingte Bewegungen elektrischer Ladungen im Werkstück innerhalb des "quasi statischen" Magnetfeldes hervor gerufen werden.

Allen bekannten elektromagnetischen Ultraschallwandlern liegt das gemeinsame Entwicklungsziel zugrunde, die Messempfindlichkeit und damit verbunden die mit den Sende- und Empfangsspulenanordnungen erzeugbaren Signalamplituden sowohl im Sende- als auch im Empfangssignal zu optimieren. Hierbei gilt es zum einen, den Koppelmechanismus, mit dem die erzeugten und nachzuweisenden HF-Felder zwischen dem Ultraschallwandler und dem Werkstück ein- und ausgekoppelt werden, möglichst verlustfrei zu gestalten und zum anderen die Feldstärke des quasistatischen Magnetfeldes, die für die Erzeugung und für den Nachweis von Ultraschallwellen massgeblich ist, möglichst groß zu wählen.

Aus der DE 42 23 470 C2 geht ein gattungsgemäßer elektromagnetischer Prüfkopf für die Senkrechteinschallung von linear polarisierten Transversalwellen hervor, bei dem die HF-Magnetfelder zwischen dem Prüfkopf und dem Werkstück auf höchst effiziente Weise ein- bzw. ausgekoppelt werden, ohne dabei, wie es bei einer Vielzahl anderer Prüfköpfen der Fall ist, die zumeist als HF-Luftspulen ausgebildeten Sende- und Empfangsspulenanordnungen unmittelbar auf der Werkstückoberfläche aufliegend anzuordnen. Vielmehr sieht der in der vorstehenden Druckschrift beschriebene elektromagnetische Prüfkopf gemäß Figur 2 einen halb offen ausgebildeten, kommerziell aus amorphen Bandmaterial gefertigten Ringbandkern 6 vor, der jeweils von einer Sende- 7 sowie von einer Empfangsspulenanordnung 8 umwickelt ist. Die Stirnflächen 11 des halb offen ausgebildeten Ringbandkerns 6 dienen als Koppelflächen für die HF-Magnetfelder und sind in geeigneter Weise auf die Oberfläche des zu untersuchenden Werkstückes 5 auflegbar. Die durch die HF-Sendespulenanordnung 7 erzeugten HF-Magnetfelder gelangen über die Stirnflächen 11 des Ringbandkerns 6 in das Werkstück 5 und vermögen oberflächennahe Wirbelströmen 12 innerhalb der Skintiefe des Werkstückes 5 zu induzieren.

Das zur Schallwandlung notwendige senkrecht zur Oberfläche des Werkstückes 5 orientierte quasistatische Magnetfeld wird mittels zweier gleichnamiger Permanentmagnete 3 erzeugt und über einen, im Inneren des Ringbandkerns vorgesehenen Weicheisenkern 2 zur Materialoberfläche des Werkstückes 5 geführt. Hierbei befindet sich die für die Ausbildung des senkrecht zur Werkstückoberfläche orientierten "quasistatischen" Magnetfeldes erforderliche Vormagnetisierungseinheit innerhalb des offenen Teils des Ringbandkerns.

Nachteilhaft bei der vorstehend beschriebenen Ausführungsform für einen elektromagnetischen Prüfkopf sind die nur geringen mit dem Prüfkopf erzielbaren Signalstärken für die Erzeugung sowie den Nachweis von Ultraschallwellen. So lassen sich aufgrund des konstruktiv vorgegebenen geringen Volumens der Vormagnetisierungseinheit keine größeren magnetischen Flüsse erzeugen.

Neben der vorstehenden Druckschrift gehen aus der DE 36 37 366 A1 sowie der DE 195 49 207 A1 Prüfköpfe zur zerstörungsfreien Prüfung hervor, die jedoch über einen anderen Aufbau verglichen zu dem vorstehend beschriebenen verfügen. So ist der DE 36 37 366 A1 ein elektromagnetischer Ultraschallwandler entnehmbar, dessen HF-Sende- und Empfangsspulenanordnung längs einer rippenartigen Trägerstruktur aufgebracht sind, die von einer Magnetanordnung zur Erzeugung des quasistatischen Magentfeldes überragt ist. Aus der DE 195 49 207 A1 ist ein entsprechender Prüfkopf zu entnehmen, der zwar ein Magnetfeld konzentrierendes Element aufweist, sich jedoch in allen anderen Details von der eingangs beschriebenen Vorrichtung unterscheidet.

EP 0775910 beschreibt ebenfalls eine Vorrichtung zur Prüfung Ferromagnetischer Materialen.

### Darstellung der Erfindung

Der Erfindung liegt die Aufgabe zugrunde, einen gattungsgemäßen elektromagnetischen Ultraschallprüfkopf derart weiterzubilden, dass die mit dem Prüfkopf innerhalb eines Werkstückes erzeugbaren linear polarisierten Transversalwellen höhere Signalamplituden aufweisen sollen, als es mit den bisherigen Prüfköpfen der Fall ist. Insbesondere soll die Nachweisempfindlichkeit derartiger Prüfköpfe gesteigert werden, ohne dabei die für die Erzeugung sowie für den Empfang von Ultraschallwellen innerhalb eines Werkstückes erforderlichen HF-Spulenanordnungen nahe an der Werkstückoberfläche plazieren zu müssen.

Die Lösung der der Erfindung zugrunde liegenden Aufgabe ist im Anspruch 1 angegeben. Den Erfindungsgedanken vorteilhaft weiterbildende Merkmale sind in den Unteransprüchen sowie der Beschreibung zu entnehmen.

Der Erfindung liegt die Idee zugrunde, ausgehend von dem elektromagnetischen Prüfkopf gemäß der DE 42 23 470 C2 eine gezielte Möglichkeit zur Vergrößerung des Bauvolumens der für das "quasi statische" Magnetfeld erforderlichen Vormagnetisierungseinheit anzugeben. Durch die bauliche Vergrößerung der Vormagnetisierungseinheit gelingt es die Stärke des senkrecht in das Werkstück eintretende "quasi statischen" Magnetfeldes zu erhöhen, so dass die für die Erzeugung von Ultraschallwellen innerhalb des Werkstückes verantwortlichen Lorentz-Kräfte oder Magnetostriktionen vergrößert werden, wodurch letztlich Ultraschallwellen größerer Amplituden entstehen.

In umgekehrter Weise führt die konstruktionsbedingte Magnetfeldsteigerung des innerhalb des Werkstückes eintretenden "quasi statischen" Magnetfeldes zur Ausbildung stärkerer HF-Felder, die durch Ultraschallwellen bedingte Ladungsauslenkungen innerhalb des Werkstückes in Gegenwart des quasistatischen Magnetfeldes erzeugt und über die Stirnflächen in den Ringbandkern eingekoppelt werden. Diese HF-Felder vermögen nun in der Empfangsspulenanordnung höhere elektrische Spannungen zu induzieren, wodurch letztlich die Nachweisempfindlichkeit des elektromagnetischen Ultraschallwandlers entscheidend verbessert werden kann.

Erfindungsgemäß sieht hierbei ein elektromagnetischer Ultraschallprüfkopf gemäß des Oberbegriffes des Patentanspruches 1 eine mittel- oder unmittelbar mit dem Werkstück über eine Kontaktfläche kontaktierbare Vormagnetisierungseinheit auf; die seitlich neben dem wenigstens einen teilringartig ausgebildeten Magnetkern, der vorzugsweise in Form eines Ringbandkerns ausgebildet ist, derart angeordnet ist, so dass der teilringartig ausgebildete Magnetkern senkrecht zur Kontaktfläche von der Vormagnetisierungseinheit überragbar ist.

Im Unterschied zu der vorstehend zitierten DE 42 23 470 C2 wird die Vormagnetisierungseinheit anordnungsbedingt nicht von dem vorzugsweise halboffen ausgebildeten Ringbandkern überragt, vielmehr befindet sich dieser seitlich unmittelbar neben der Vormagnetisierungseinheit ohne dabei die Vormagnetisierungseinheit oder auch nur Teile von dieser in Projektion zur Oberfläche des Werkstückes zu überragen.

In einer bevorzugten Ausführungsform ist der als Ringbandkern ausgeführte, teilringartig ausgebildete Magnetkern in Bezug auf seine Teilringebene um einen Winkel α zur Kontaktfläche geneigt angeordnet. Hierbei schließen die beiden, dem Werkstück zugewandten Stirnflächen des Ringbandkerns ebenso den Winkel α mit der Teilringebene ein, so dass der Ringbandkern weitgehend bündig über die Stirnflächen auf dem Werkstück aufliegt. Die Neigung der Teilringebene des Ringbandkerns ist vorzugsweise derart zur Kontaktfläche ausgebildet, so dass sich die über die Stirnflächen in das Werkstück einkoppelbaren HF-Magnetfelder in den Bereich unterhalb der Kontaktfläche zwischen der Vormagnetisierungseinheit und dem Werkstück erstrecken und somit in Wechselwirkung mit dem quasistatischen Magnetfeld innerhalb des Werkstückes zur Ausbildung von Wirbelströmen treten.

Durch die seitliche Anordnung wenigstens eines teilringartig ausgebildeten Magnetkerns relativ zur Kontaktfläche zwischen der Vormagnetisierungseinheit und dem Werkstück ist es möglich, die Vormagnetisierungseinheit, bspw. in Form eines oder mehrerer Permanentmagnete beliebig groß, insbesondere in senkrechter Erstreckung zur Kontaktfläche beliebig hoch auszubilden, um auf diese Weise ein gewünschtes starkes "quasi statisches" Magnetfeld zu erzeugen. Der Größenskalierung für die Vormagnetisierungseinheit sind durch die senkrecht zur Kontaktfläche nach oben offene Bauform der Ultraschallwandler-Anordnung grundsätzlich keine Grenzen gesetzt, lediglich Aspekte bezüglich der Handhabung der Anordnung können die Baugröße beschränken.

In Anlehnung an die in der DE 42 23 470 C2 bekannten Anordnung für einen elektromagnetischen Ultraschallwandler sieht eine einfache Ausführungsform den Einsatz nur eines einzigen Ringbandkerns vor, längs dem sowohl eine HF-Spulenanordnung für die Sende- als auch für die Empfangseinrichtung umwickelt ist.

Ein bevorzugtes Ausführungsbeispiel sieht jedoch zwei als Ringbandkerne ausgeführte teilringartig ausgebildete Magnetkerne vor, die in Bezug zur Kontaktfläche und somit relativ zur Vormagnetisierungseinheit auf gegenüberliegenden Seiten angeordnet sind. Aus Gründen einer getrennten Signalführung und damit der Vermeidung einer gegenseitigen Beeinflussung von Sende- und Empfangssignalen sind die Sendespulenanordnung und Empfangsspulenanordnung getrennt voneinander jeweils auf der Vormagnetisierungseinheit gegenüber befindlichen Ringbandkernen angeordnet. Eine derartig getrennte Spulenanordnung auf zwei getrennten Ringbandkernen verhilft vornehmlich der Reduzierung sogenannter Totzeiten, die auftreten, wenn sich Sende- und Empfangsspulenanordnung auf ein und demselben Ringbandkern angeordnet sind. Dies führt letztlich dazu, dass in jenen kurzen Zeitabschnitten, in denen die Sendespulenanordnung den Ringbandkern in eine Sättigungsmagnetisierung überführt, der Ringbandkern keine Empfangssignale zu detektieren vermag. Wird der Ultraschallwandler bspw. zur Dickenmessung eingesetzt, so führen diese Sättigungseffekte dazu, dass Totzonen entstehen, die für die Dickenmessung unzugänglich sind, d.h. durch die zeitliche unmittelbare Abfolge von Sende- und Empfangssignalen können Empfangssignale aufgrund des Sättigungseffektes erst nach einem zeitlichen Mindestabstand zum Sendesignal detektiert werden. Somit lassen sich Werkstücke erst ab einer Werkstückdicke von 3 - 4 mm Dicke erfassen.

Eine weitere Ausführungsform sieht die Anordnung zweier Ringbandkern-Paare vor, die jeweils in Orthogonalstellung zueinander um die Kontaktfläche, die vorzugsweise rechteckig ausgebildet ist, angeordnet sind. Auf diese Weise lassen sich innerhalb des Werkstückes jeweils zwei linear polarisierte Transversalwellenfelder erzeugen mit jeweils senkrecht zueinander orientierten Schwingungsebenen. Auf diese Weise lassen sich Materialfehler, bspw. in Form von Rissen, deren Rissverläufe entweder senkrecht zur einen oder anderen Schwingungsebene orientiert sind, exakt erfassen.

Für eine möglichst effiziente, d.h. verlustarme, und konzentrierte Einkopplung des "quasi statischen" Magnetfeldes in das zu untersuchende Werkstück sieht eine Ausführungsform den Einsatz zweier gleichpoliger Permanentmagnete vor, die gemeinsam von einem aus weichmagnetischen Material gefertigten Werkstück zumindest teilweise umschlossen sind, das zu Seiten des Werkstückes mit einem Konzentrator verbunden ist, der seinerseits ebenfalls auch weichmagnetisches Material enthält, um den magnetischen Fluß auf die Kontaktfläche zu konzentrieren. Der Konzentrator selbst weist zwei unterschiedlich groß ausgebildete, gegenüberliegende Flächen auf, von denen die größere Fläche mit dem weichmagnetischen Werkstoff verbunden ist, der die Permanentmagnete zumindest teilweise umschließt, und von denen die kleinere Fläche dem zu untersuchenden Werkstück zugewandt ist und die Größe der Kontaktfläche zwischen der Vormagnetisierungseinheit und dem Werkstoff definiert. Vorzugsweise ist die Kontaktfläche, wie bereits erwähnt, rechteckförmig ausgebildet. längs derer wenigstens zwei sich gegenüberliegenden Seitenkanten die schräg zur Kontaktfläche geneigten Ringbandkerne angeordnet sind.

Um eine störende Wirbelstromeinkopplung durch die erzeugten HF-Felder innerhalb des Konzentrators aufgrund der räumlichen Nähe zu den die HF-Felder führenden Ringbandkernen zu vermeiden, ist der Konzentrator nicht aus einem homogenen elektrisch leitfähigen Material gefertigt, sondern besteht entweder aus einem elektrisch nicht leitfähigem Material, in das ferromagnetische Partikel matrixartig eingebracht sind, um den magnetischen Fluß zu leiten und zu konzentrieren oder aber der Konzentrator ist vergleichsweise dem Magentkern eines Transformators aufgebaut und besteht aus einer Vielzahl stapelartig zusammengefügter Metallplatten.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Seiten- und Vorderansicht eines erfindungsgemäß ausgebildeten elektromagnetischen Ultraschallwandlers sowie

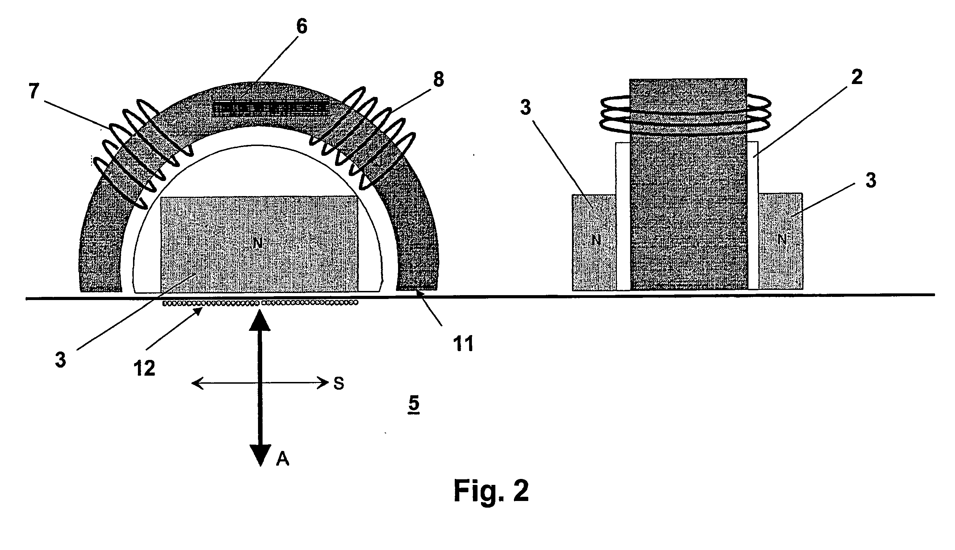

- Fig. 2: elektromagnetischer Ultraschallwandler gemäß Stand der Technik.

### Wege zur Ausführung der Erfindung, gewerbliche Verwendbarkeit

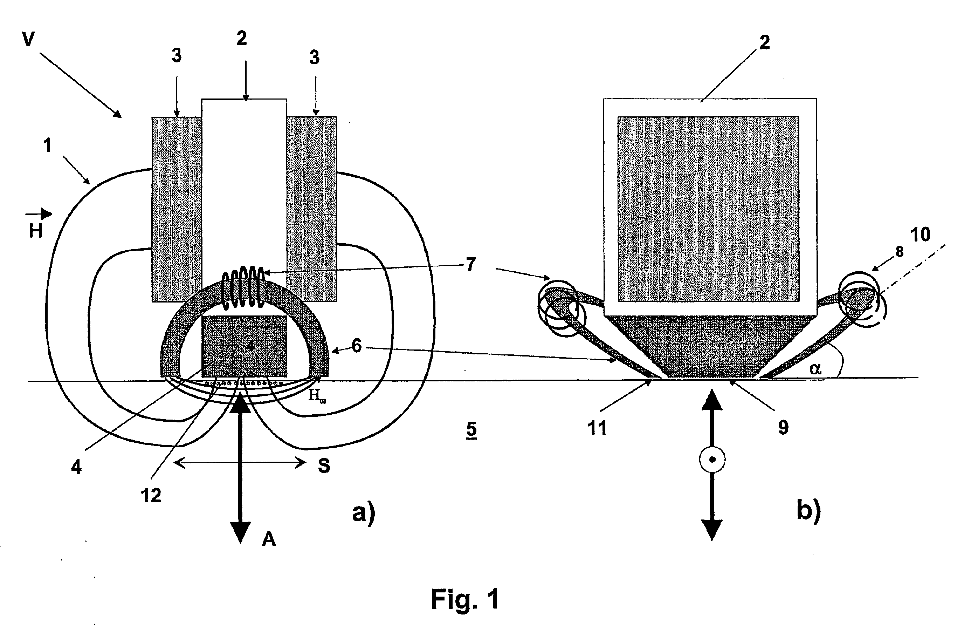

Die Figuren 1a und 1b zeigen die Seiten- und Vorderansicht eines Ausführungsbeispiels eines erfindungsgemäß ausgebildeten elektromagnetischen Ultraschallwandlers. Dieser besteht aus einer Vormagnetisierungseinheit V zur Erzeugung eines ausreichend starken, senkrecht in den zu prüfenden Werkstoff W eintretenden statischen Magnetfeldes 1. Die Vormagnetisierungseinheit V weist zwei gleichnamig gepolte Permanentmagnete 3 auf, die von einem weichmagnetischen Werkstoff 2 wenigstens teilweise umschlossen sind, über den der magnetische Fluss H über einen mit dem Werkstoff 2 verbundenen Konzentrator 4 senkrecht zur Oberfläche des Werkstückes 5 in das Werkstück 5 eingeleitet wird.

Aus der Vorderansicht gemäß Figur 1b ist ersichtlich, dass der Konzentrator 4 eine zur Kontaktfläche 9 zwischen der Vormagnetisierungseinheit V und der Werkstückoberfläche verjüngend zulaufende Form besitzt, wodurch der im Inneren des Konzentrators 4 geführte magnetische Fluss H auf die eng begrenzte Kontaktfläche 8 konzentriert wird.

Rechts und links zu Seiten des Konzentrators 4 ist je ein halb offener Ringbandkern 6 angeordnet. Auf einem der Ringbandkerne 6 ist die Sendespulenanordnung 7, auf dem anderen die Empfangsspulenanordnung 8 aufgebracht. Die Ringbandkerne 6 sind bezüglich ihrer Teilringebenen 10 zur Kontaktfläche 9 derart geneigt, so dass zum einen gewährleistet ist, dass die Vormagnetisierungseinheit V eine die Ringbandkerne 6 beliebig senkrecht zur Kontaktfläche 9 überragende Bauhöhe annehmen kann, zum anderen dass die Spulenanordnungen 7, 8 von der Werkstückoberfläche beabstandet sind, wodurch diese keinerlei mechanischen Verschleiß durch unmittelbaren Kontakt mit der Werkstückoberfläche unterliegen.

Um zu gewährleisten, dass die HF-Magnetfelder von bzw. zu den einzelnen HF-Spulenanordnungen 7, 8 weitgehend verlustfrei über die Werkstückoberfläche in das Werkstück 5 einkoppelbar sind, schließen die Stirnflächen 11 der Ringbandkerne 6 mit der jeweiligen Teilringebene 10 ebenso den Winkel α ein, der grundsätzlich zwischen 0° und 90° gewählt werden kann, vorzugsweise jedoch zwischen 30° und 60° beträgt. Auf diese Weise ist gewährleistet, dass trotz Schrägstellung der Ringbandkerne 6 die Stirnflächen 11 bündig zu Seiten der Kontaktfläche 9 auf der Werkstückoberfläche des Werkstückes 5 aufliegen und eine weitgehend verlustfreie Ein- bzw. Auskopplung der HF-Magnetfelder möglich wird.

Zur Ultraschallwellenanregung wird die Sendespulenanordnung 7, die üblicherweise mit einem HF-Generator verbunden ist, mit einem HF-Stromburst-Signal gespeist. Der von der Sendespulenanordnung 7 erzeugte magnetischer Wechselfluss H_{ω} gelangt über den Ringbandkern 6 und über einen kleinen, zwischen den Stirnflächen 11 und der Werkstückoberfläche eingeschlossenen Luftspalt in das Werkstück 5. Zwischen den Stirnflächen 11 der die Sendespulenanordnung 7 tragenden Ringbandkerns bildet sich innerhalb der Skintiefe des Werkstückes ein räumlich homogenes magnetisches Wechselfeld H_{ω} aus. Die mit dem magnetischen Wechselfeld H_{ω} innerhalb des Werkstückes 5 gekoppelten Wirbelströme werden von dem über den Konzentrator 4 senkrecht in das Werkstück 5 eintretenden magnetischen Gleichfeld überlagert, wodurch aufgrund der sich ausbildenden Lorentz-Kräfte sowie Magnetostriktionen senkrecht zur Richtung der Wirbelströme schwingende und senkrecht zur Werkstückoberfläche bzw. zur Kontaktfläche 9 sich ausbreitende Ultraschall-Transversalwellen erzeugt werden. Durch die Pfeildarstellungen ist die Schwingungsrichtung S sowie die Ausbreitungsrichtung A der Ultraschall-Transversalwellen gekennzeichnet.

Der Empfangsmechanismus zum Nachweise des sich innerhalb des Werkstückes ausbreitenden Ultraschallwellen beruht auf dem umgekehrten Effekt, nämlich die sich innerhalb des Werkstückes ausbildende Schallschnelle der zum Prüfkopf zurückkommenden Ultraschallwelle erzeugt in Wechselwirkung mit dem statischen Magnetfeld ein elektrisches Feld, das über den Ringbandkern 6 zur Empfangsspulenanordnung 8 geleitet eine elektrische Spannung in dieser induziert. Die in der Empfangsspulenanordnung 8 induzierte elektrische Spannung kann üblicherweise mit einem nachgeschalteten Verstärker verstärkt und entsprechend mit einer Auswerteeinheit ausgewertet werden.

Der erfindungsgemäß ausgebildete elektromagnetische Ultraschallwandler vereint somit die Vorteile in Bezug auf eine möglichst verlustfreie Ein- sowie Auskopplung von für die Erzeugung bzw. Detektion erforderlichen HF-Magnetfeldern in bzw. aus dem zu untersuchenden Werkstück. Hierbei sind in vorteilhafter Weise die für die Erzeugung und für den Empfang notwendigen Spulenanordnungen von der Werkstückoberfläche beabstandet angeordnet, so dass sie keinerlei mechanischem Verschleiß unterliegen. Zudem bietet die erfindungsgemäß ausgebildete Anordnung eine nahezu beliebig vornehmbare Skalierbarkeit der Vormagnetisierungseinheit, um die Magnetfeldstärke des "quasi statischen" Magnetfeldes in gewünschter Weise zu optimieren. Diese Maßnahme führt letztlich zur Ausbildung großer Signalamplituden für die Ausbildung starker Ultraschallwellen innerhalb des Werkstückes, wodurch die Nachweisempfindlichkeit des elektromagnetischen Ultraschallwandlers entscheidend verbessert werden kann. Grenzen für die Skalierbarkeit der Vormagnetisierungseinheit sind lediglich durch Anforderung im Hinblick auf Handhabbarkeit gesetzt.

### Bezugszeichenliste

- 1: "quasi statisches" Magnetfeld
- 2: weichmagnetischer Werkstoff
- 3: Permanentmagnete
- 4: Konzentrator
- 5: Werkstück
- 6: Ringbandkern
- 7: Sendespulenanordnung
- 8: Empfangsspulenanordnung
- 9: Kontaktfläche
- 10: Teilringebene
- 11: Stirnflächen
- 12: Wirbelströme
- S: Schwingungsrichtung
- V: Vormagnetisierungseinheit
- A: Ausbreitungsrichtung

## Patentansprüche

1. Elektromagnetischer Ultraschallprüfkopf zur koppelmittelfreien Erzeugung sowie Empfang von Ultraschallwellen in Form linear polarisierter Transversalwellen in ein bzw. aus einem Werkstück (5) mit
- einer die Ultraschallwellen innerhalb des Werkstückes (5) erzeugenden Einheit, die eine Sendespulenanordnung (7), an die zur Erzeugung eines HF-Magnetfeldes eine HF-Spannung anlegbar ist, sowie eine Vormagnetisierungseinheit (V) zur Erzeugung eines quasistatischen Magnetfeldes aufweist, das das HF-Magnetfeld im Werkstück (5) überlagert, sowie
- einer die Ultraschallwellen empfangenden Einheit, die eine Empfangsspulenanordnung (8) vorsieht, die mit eine Auswerteeinheit verbindbar ist, wobei
die Sendespulenanordnung (7) und die Empfangsspulenanordnung (8) torusförmig auf wenigstens einem teilringartig ausgebildeten Magnetkern (6) angeordnet sind, der jeweils zwei dem Werkstück (5) zukehrbare Stirnflächen (11) aufweist, über die die HF-Magnetfelder in das Werkstück (5) oder aus dem Werkstück ein- bzw. auskoppelbar sind,
**dadurch gekennzeichnet, dass** die Vormagnetisierungseinheit (V) mittel- oder unmittelbar mit dem Werkstück (5) über eine Kontaktfläche (9) kontaktierbar ist, und
dass der wenigstens eine teilringartig ausgebildete Magnetkern (6) derart seitlich neben der Kontaktfläche (9) der Vormagnetisierungseinheit (V) angeordnet ist, so dass der teilringartig ausgebildete Magnetkern (6) senkrecht zur Kontaktfläche (9) von der Vormagnetisierungseinheit (V) überragbar ist.

2. Elektromagnetischer Ultraschallprüfkopf nach Anspruch 1,
**dadurch gekennzeichnet, dass** die Vormagnetisierungseinheit (V) ein quasistatisches Magnetfeld erzeugt, dessen Magnetfeldlinien die Kontaktfläche (9) weitgehend senkrecht durchsetzen.

3. Elektromagnetischer Ultraschallprüfkopf nach Anspruch 1 oder 2,
**dadurch gekennzeichnet, dass** die Vormagnetisierungseinheit (V) wenigstens einen, vorzugsweise zwei gleichpolige Permanentmagnete (3) vorsieht, deren Magnetfeldlinien vermittels eines Konzentrators (4) auf die Kontaktfläche (9) konzentrierbar sind.

4. Elektromagnetischer Ultraschallprüfkopf nach Anspruch 3,
**dadurch gekennzeichnet, dass** der wenigstens eine Permanentmagnet (3) zumindest teilweise von einem weichmagnetischen Werkstück (2) umschlossen ist, das die Magnetfeldlinien auf den Konzentrator (4) bündelt.

5. Elektromagnetischer Ultraschallprüfkopf nach Anspruch 4 oder 5,
**dadurch gekennzeichnet, dass** der Konzentrator (4) aus weichmagnetischen Material besteht und zwei sich gegenüberliegende Flächen aufweist, von denen eine größer als die andere ist und die kleinere Fläche die Größe der Kontaktfläche (9) vorgibt und die größere Fläche mit dem weichmagnetischen Werkstück (2) verbunden ist.

6. Elektromagnetischer Ultraschallprüfkopf nach Anspruch 5,
**dadurch gekennzeichnet, dass** der Konzentrator (4) elektrisch nicht leitendes Material aufweist, in das ferromagnetische Partikel matrixartig eingebettet sind, oder dass der Konzentrator (4) aus einer stapelförmigen Anordnung einzelner Metallplatten besteht.

7. Elektromagnetischer Ultraschallprüfkopf nach einem der Ansprüche 1 bis 6,
**dadurch gekennzeichnet, dass** der wenigstens eine teilringartig ausgebildete Magnetkern (6) eine Teilringebene (10) aufweist, die mit der Kontaktfläche (9) einen Winkel α mit 0° < α < 90°, vorzugsweise 30° < α < 60°; einschließt, und
dass die Stirnflächen (11) des teilringartig ausgebildeten Magnetkerns (6) den Winkel α mit der Teilringebene (10) einschliessen.

8. Elektromagnetischer Ultraschallprüfkopf nach einem der Ansprüche 1 bis 7,
**dadurch gekennzeichnet, dass** wenigstens zwei teilringartig ausgebildete Magnetkerne (6) vorgesehen sind, von denen einer die Sendespulenanordnung (7) und der andere die Empfangsspulenanordnung (8) vorsieht, und
dass die teilringartig ausgebildeten Magnetkerne (6) relativ zur Vormagnetisierungseinheit (V) auf gegenüberliegende Seiten angeordnet sind.

9. Elektromagnetischer Ultraschallprüfkopf nach Anspruch 8,
**dadurch gekennzeichnet, dass** die teilringartig ausgebildeten Magnetkerne (6) achssymmetrisch zu einer die Vormagnetisierungseinheit (V) durchsetzenden Symmetrieachse angeordnet sind, und
dass die Teilringebenen (10) der teilringartig ausgebildeten Magnetkerne (6) jeweils den Winkel α mit der Kontaktfläche (9) einschließen.

10. Elektromagnetischer Ultraschallprüfkopf nach einem der Ansprüche 1 bis 9,
**dadurch gekennzeichnet, dass** der wenigstens eine teilringartig ausgebildete Magnetkern (6) als Ringbandkern ausgebildet ist.

## Claims

1. An electromagnetic ultrasonic probe for coupling-medium-free generation and reception of ultrasonic waves in the form of linearly polarized transverse waves in, respectively from a workpiece (5) having
- a unit which generates the ultrasonic waves inside the workpiece (5) and which is provided with a transmission coil arrangement (7), to which a high-freqeuncy voltage can be applied to generate a high-frequency field, and a premagnetizing unit (V) to generate a quasi-static magnetic field which overlays the high-frequency magnetic field in workpiece,
and
- an ultrasonic wave receiving unit which provides a reception coil arrangement (8) which can be connected to an evaluation unit, with
the transmission coil arrangement (7) and the reception coil unit (8) being disposed torus-shaped at least on one partially toroidal magnetic core (6), which is provided with two front ends (11) which can be turned to face the workpiece (5) and which can be coupled into, respectively coupled out of, the workpiece via the high-frequency fields,
wherein the premagnetizing unit (V) can be contacted directly or indirectly with the workpiece (%) via a contact area (9) and
the at least partially toroidal magnetic core (6) is disposed laterally next to the contact area (9) of the premagnetizing unit (V) in such a manner that the premagnetizing unit (V) can project over the toroidal magnetic core (6) perpendicular to the contact area (9).

2. The electromagnetic ultrasonic probe according to claim 1,
wherein the premagnetizing unit (V) generates a quasi-static magnetic field whose magnetic field lines pass through the contact area (9) large perpendicular thereto.

3. The electromagnetic ultrasonic probe according to claim 1 or 2,
wherein the premagnetizing unit (V) provides at least one preferably two same poled permanent magnets (3) whose magnetic field lines can be concentrated by means of a concentrator (4) on the contact area (9).

4. The electromagnetic ultrasonic probe according to claim 3,
wherein the at least one permanent magnet (3) is at least partly enclosed by a soft magnetic workpiece (2) which bundles the magnetic field lines on the concentrator (4).

5. The electromagnetic ultrasonic probe according to claim 1 or 5,
wherein the concentrator (4) is made of a soft magnetic material and is provided with two surfaces opposite each of which one is larger than the other and the smaller surface determines the size of the contact area (9) and the larger surface is connected to the soft magnetic workpiece (2).

6. The electromagnetic ultrasonic probe according to claim 5,
wherein the concentrator (4) is provided with an electrically nonconducting material in which ferromagnetic particles are embedded matrix-like or the concentrator (4) comprises a stack-like arrangement.

7. The electromagnetic ultrasonic probe according to one of the claims 1 to 6,
wherein the at least one partially toroidal magnetic core (6) has a partially toroidal plane (10) which forms with the contact area (9) an angle α with 0° < α < 90°, preferably 30°< α < 60° and
the front ends (11) of the partially toroidal magnetic core (6) forms an angle α with the partially toroidal plane (10).

8. The electromagnetic ultrasonic probe according to one of the claims 1 to 7,
wherein at least two partially toroidal magnetic cores (6) are provided of which one provides the transmission coil (7) and the other the reception coil (8), and
wherein the partially toroidal magnetic cores are disposed relative to the premagnetizing unit (V) on opposite sides.

9. The electromagnetic ultrasonic probe according to claim 8,
wherein the partially toroidal magnetic cores (6) are disposed axially symmetrically to a symmetrical axis passing through the premagnetizing unit (V), and
the partially toroidal planes (10) of the partially toroidal magnetic cores (6) each form an angle α with the contact area (9).

10. The electromagnetic ultrasonic probe according to one of the claims 1 to 9,
wherein the at least one partially toroidal magnetic core (6) is designed as a toroidal tape core.

## Revendications

1. Palpeur à ultrasons électromagnétique destiné à la production et à la réception, sans éléments de couplage, d'ondes ultrasonores se présentant sous la forme d'ondes transversales polarisées linéairement, dans ou en provenance d'une pièce usinée (5) avec
- une unité produisant les ondes ultrasonores à l'intérieur de la pièce usinée (5), composée d'un système de bobines d'émission (7) pouvant recevoir une tension HF pour la production d'un champ magnétique HF ainsi qu'une unité de prémagnétisation (V) destinée à produire un champ magnétique quasi statique, se superposant au champ magnétique HF dans la pièce usinée (5)
- une unité recevant les ondes ultrasonores comportant un système de bobines de réception (8) pouvant être connecté à une unité d'évaluation, le système de bobines d'émission (7) et le système de bobines de réception (8) étant disposés sous forme de tore sur au moins un noyau magnétique (6) conçu sous forme d'anneau partiel, qui présente respectivement deux surfaces frontales (11) pouvant être orientées vers la pièce usinée (5), permettant de coupler les champs magnétique HF dans ou hors de la pièce usinée (5), **caractérisé en ce que** l'unité de prémagnétisation (v) est contactable directement avec la pièce usinée (5) par l'intermédiaire d'une surface de contact (9) et **en ce que** le noyau magnétique conçu sous forme d'anneau partiel (6) est disposé latéralement à côté de la surface de contact (9) de l'unité de prémagnétisation (V), de sorte que le noyau magnétique conçu sous forme d'anneau partiel (6) peut faire saillie de l'unité de prémagnétisation (V) perpendiculairement à la surface de contact (9).

2. Palpeur à ultrasons électromagnétique selon la revendication 1 ou la revendication 2, **caractérisé en ce que** l'unité de prémagnétisation (V) génère un champ magnétique quasi statique dont les lignes de champ magnétique traversent essentiellement perpendiculairement la surface de contact (9).

3. Palpeur à ultrasons électromagnétique selon la revendication 1 ou la revendication 2, **caractérisé en ce que** l'unité de prémagnétisation (V) prévoit au moins deux aimants permanents (3) de polarisation identique dont les lignes de champ magnétique peuvent être concentrées sur la surface de contact (9) au moyen d'un concentrateur (4).

4. Palpeur à ultrasons électromagnétique selon la revendication 3, **caractérisé en ce qu'**au moins un aimant permanent (3) est entouré au moins partiellement par une pièce usinée magnétique douce (2) qui focalisent les lignes de champ magnétique sur le concentrateur (4).

5. Palpeur à ultrasons électromagnétique selon la revendication 4 ou 5, **caractérisé en ce que** le concentrateur (4) se compose de matériau magnétique doux et présente deux surfaces opposées dont l'une est plus grande que l'autre et la plus petite surface détermine la dimension de la surface de contact (9) et **en ce que** la surface la plus grande est reliée à la pièce usinée magnétique douce (2).

6. Palpeur à ultrasons électromagnétique selon la revendication 5, **caractérisé en ce que** le concentrateur (4) présente un matériau électriquement non conducteur dans lequel sont enrobées comme une matrice des particules ferromagnétiques ou **en ce que** le concentrateur (4) se compose d'une disposition empilée de plaques métalliques individuelles.

7. Palpeur à ultrasons électromagnétique selon l'une des revendications 1 à 6, **caractérisé en ce qu'**au moins un noyau magnétique (6) conçu sous forme d'anneau partiel présente un plan annulaire partiel (10) qui renferme avec la surface de contact (9) un angle α avec 0° < α < 90°, de préférence 30°< α < 60° et **en ce que** les surfaces frontales (11) du noyau magnétique conçu sous forme d'anneau partiel (6) renferme l'angle α avec le plan annulaire partiel (10).

8. Palpeur à ultrasons électromagnétique selon l'une des revendications 1 à 6, **caractérisé en ce qu'**au moins deux noyaux magnétiques (6) conçus sous forme d'anneau partiel sont prévus, dont l'un prévoit le système de bobines d'émission (7) et l'autre le système de bobines de réception (8) et **en ce que** les noyaux magnétiques conçus sous forme d'anneau partiel (6) sont disposés par rapport à l'unité de prémagnétisation (V) sur deux faces opposées.

9. Palpeur à ultrasons électromagnétique selon la revendication 8, **caractérisé en ce que** les noyaux magnétiques (6) conçus sous forme d'anneau partiel sont disposés axialement symétriques à un axe de symétrie traversant l'unité de prémagnétisation (V) et **en ce que** les plans annulaires partiels (10) des noyaux magnétiques (6) conçus sous forme d'anneau partiel (6) enferment avec la surface de contact (9) respectivement l'angle α.

10. Palpeur à ultrasons électromagnétique selon l'une des revendications 1 à 6, **caractérisé en ce qu'**au moins le noyau magnétique (6) conçu sous forme d'anneau partiel est réalisé sous forme de noyau annulaire en bande.
